# EUROPEAN PATENT APPLICATION

(11) **EP 3 092 908 A1**
(43) Date of publication of application: **16.11.2016**
(21) Application number: 15734876.4
(22) Date of filing: 07.01.2015
(51) Int. Cl.: A23N 17/02, A01F 25/16, A23N 17/00

(54) **FODDER COMPRESSION DEVICE**

(30) Priority: 08.01.2014 KR 20140002235
(71) Applicant: Shin, Sang Man, Gyeonggi-do 429-802 (KR)
(72) Inventor: Shin, Sang Man, Gyeonggi-do 429-802 (KR)
(74) Representative: Jeck, Anton
(86) International application number: PCT/KR2015/000130
(87) International publication number: WO 2015/105323

(57) **Abstract**

Disclosed is a feedstuff compression device including: a body housing having a compression chamber formed therein so as to communicate with a silo for storing feedstuff; a compression unit including a pair of compression rollers rotatably disposed in the compression chamber to compress and crush the feedstuff supplied through a feedstuff inlet by the compression rollers which rotate in opposite directions in contact with each other; and a driving unit for rotating the pair of compression rollers of the compression unit in opposite directions to each other, wherein the feedstuff of a silo is supplied to the compression chamber, compressed and crushed by the pair of compression rollers to the feedstuff having a smaller particle size than the feedstuff stored in the silo, so that the feedstuff having a smaller particle size than the feedstuff stored in the silo is fed to the livestock.

## Description

This application claims priority to Korean Patent Application No. 10-2014-0002235, filed on January 8, 2014 in the Korean Intellectual Property Office, the entire disclosure of which is incorporated herein by reference.

### 1. Field of the Invention

The present invention relates to a feedstuff compression device, and more specifically, to a feedstuff compression device for feeding feedstuff in which the feedstuff of a particle size suitable to be dropped in a silo is crushed to the feedstuff of a particle size that can be easily digested by a livestock and fed thereto, so that an amount of undigested and discarded feedstuff may be decreased by increasing a digestion efficiency of the feedstuff, and thereby a feedstuff usage necessary for breeding the livestock may be reduced.

### 2. Description of the Related Art

Generally, a scale of breeding livestock has been gradually increased to have price competitiveness, and mechanization and automation are therefore required for artificial mass breeding. In this regard, in order to feed the feedstuff to the livestock, an automatic feedstuff feeding system has been introduced and used in the related art.

Such a conventional automatic feedstuff feeding system is disclosed in Korean Utility Model Registration No. 20-0143791, which includes a frame structure for opening and closing doors by a cylinder operated depending on a detecting signal from a detecting sensor, and a feedstuff feeder for automatically feeding the feedstuff depending on a detecting signal from the detecting sensor.

However, the conventional automatic feedstuff feeding system is designed for only one livestock, and in order to feed the feedstuff to a large number of livestock, it is necessary to install a plurality of frame structures, and thereby breeding costs may be significantly increased. In addition, after using the system by a livestock, another livestock cannot use the system unless the livestock comes out from the frame structure by oneself, and thus a worker should move the livestock from the frame structure.

In order to solve the above-described problem, there is an automatic feedstuff feeding system that has been developed and used in the related art, in which a feedstuff feeding tube is connected between a feedstuff tank (hereinafter, referred to as a 'silo') and mangers, and a wire to which a plurality of discs are fixed at constant intervals is installed in the feedstuff feeding tube to feed the feedstuff while moving in an endless track scheme. When the feedstuff contained in the silo is dropped in the feedstuff feeding tube, the feedstuff is fed to the mangers by the discs.

In general, the livestock cannot digest 100% of feedstuff, and specifically, since pigs have a short digestive system, 40% of feedstuff is excreted without being digested, and since feedstuff intake to eat per day is calculated, there is a need to feed about 40% or more additional feedstuff, in consideration of an excretion amount.

In order to solve the above-described problem, it may be considered that the feedstuff is crushed in smaller particles and supplied to increase the digestibility. However, since the feedstuff is stored in the silo, and then is dropped to a lower side of the silo, the feedstuff should have a particle size of a predetermined range or more. If the feedstuff has a particle size of the predetermined range or less, the feedstuff does not drop due to an increased frictional force with the inner surface of the silo, and for this reason, feedstuff manufacturers had to manufacture and supply the feedstuff having a particle size of a predetermined range or more, and breeding farms had to feed about 40% or more additional feedstuff.

Therefore, there is an urgent need to develop a technique for automatically feeding the feedstuff which has an increased digestibility for the livestock, such that the feedstuff usage required for breeding the livestock may be reduced by decreasing the amount of undigested and discarded feedstuff.

Accordingly, in consideration of the above-described circumstances, it is an object of the present invention to provide a feedstuff compression device which includes: a body housing having a compression chamber formed therein so as to communicate with a silo for storing feedstuff; a compression unit including a pair of compression rollers rotatably disposed in the compression chamber of the body housing to compress and crush the feedstuff supplied through a feedstuff inlet by the compression rollers which rotate in opposite directions in contact with each other; and a driving unit for rotating the pair of compression rollers of the compression unit in opposite directions to each other, whereby the feedstuff of a particle size suitable to be dropped in a silo is crushed to the feedstuff of a particle size that can be easily digested by a livestock and fed thereto, so that an amount of undigested and discarded feedstuff may be decreased, and therefore a feedstuff usage necessary for breeding the livestock and an occurrence of feces may be reduced.

Accordingly, in consideration of the above-described circumstances, it is an object of the present invention to provide a feedstuff compression device in which the feedstuff of a particle size suitable to be dropped in a silo is crushed to the feedstuff of a particle size that can be easily digested by a livestock and fed thereto, so that an amount of undigested and discarded feedstuff may be decreased, and therefore a feedstuff usage necessary for breeding the livestock and an occurrence of feces may be reduced.

In order to accomplish the above objects, there is provided a feedstuff compression device including: a body housing which includes a feedstuff inlet formed at an upper portion thereof so as to communicate with a silo for storing feedstuff, a feedstuff discharge unit formed at a lower portion thereof, and a compression chamber formed therein so as to communicate the feedstuff inlet with the feedstuff discharge unit; a compression unit which includes a pair of compression rollers rotatably installed in the compression chamber of the body housing to compress and crush the feedstuff supplied from the silo through the feedstuff inlet by rotating in a direction of coming into contact with each other; and a driving unit which is provided in the body housing to rotate the pair of compression rollers of the compression unit in opposite directions to each other; wherein the compression unit is configured that, when the feedstuff of the silo is supplied into the compression chamber through the feedstuff inlet of the body housing, the feedstuff is compressed and crushed by the pair of compression rollers, and then discharged through the feedstuff discharge unit so as to feed the feedstuff crushed in a smaller particle size than the feedstuff stored in the silo.

Preferably, the feedstuff crushed by the pair compression rollers is fed to each manger, the feedstuff feed unit is provided with a feed wire having a plurality of discs fixed thereto at constant intervals to feed the crushed feedstuff while moving therein, and a feedstuff feed pipe in which the feed wire is movably installed, wherein the feedstuff feed pipe has an inlet port into which the crushed feedstuff is introduced from the feedstuff discharge unit, and an outlet port for feeding the introduced feedstuff to the manger, the feedstuff discharge unit of the body housing includes: a discharge hoper slantly formed so that both sides thereof are decreased downward to a central portion thereof, as seen from a direction in which the feedstuff is supplied through the feedstuff inlet; a mounting plate formed at a lower end portion of the discharge hoper so that the feedstuff feed pipe having the inlet port is mounted therein; and a discharge port formed in the discharge hoper and the mounting plate in communication with the compression chamber so as to feed the crushed feedstuff to the inlet port of the feedstuff feed unit.

In addition, the discharge hoper may have a transparent window formed in an inclined surface thereof so as to visually confirm an inside of the discharge hoper from an outside thereof.

Further, the compression unit may include: the pair of compression rollers rotatably provided in the body housing in the direction of coming into contact with each other; compression gears fixed to end portions of the respective compression rollers to rotate the compression rollers in such a manner that, when any one compression roller rotates, the other compression roller also rotates in an opposite direction to the one compression roller; and compression grooves formed on outer circumferences of the respective compression rollers in a spiral shape.

In addition, the feedstuff compression device may further include a guide unit disposed above the compression rollers in the compression chamber to guide the feedstuff introduced from the silo to a portion in which both rollers come into contact with each other, wherein the guide unit includes: insertion grooves formed on outer circumferences of both end portions of the pair of compression rollers in a ring shape, retaining plates which have semicircular fitting parts corresponding to the insertion grooves, and are disposed on the compression rollers in such a manner that the fitting parts thereof are inserted in the insertion grooves formed in each of one end portions of the compression rollers and in each of the other end portions thereof, so as to prevent the feedstuff from coming out of the pair of compression rollers; and guide plates provided between the retaining plates and slantly formed so as to supply the feedstuff to the portion in which both rollers come into contact with each other.

In addition, the feedstuff compression device may further include a tension unit configured to press the pair of compression rollers in the direction in which both rollers come into contact with each other.

Further, the tension unit having elasticity may be disposed between the end portions of the pair of compression rollers provided with the compression gears to press the compression rollers in the direction in which both rollers come into contact with each other.

Furthermore, the tension unit may include: a guide groove formed in the body housing at a position in which the end portions of the compression rollers provided with the compression gears are arranged; a moving block mounted on each end portion of the compression rollers so as to move along the guide groove; an elastic member having elasticity which presses and moves any one moving block to the other moving block so as to press any one compression roller to the other compression roller in the direction in which both rollers come into contact with each other; and a control bolt screwed to a side wall of the body housing to control a pressing force of the elastic member.

Furthermore, the compression unit may include a plurality of pairs of compression rollers arranged in a vertical direction, and a portion in which one pair of compression rollers come into contact with each other is aligned in the same direction as a portion in which the other pair of compression rollers come into contact with each other in the vertical direction, so that the feedstuff compressed and crushed by the one pair of compression rollers is supplied to a portion in which the other pair of compression rollers come into contact with each other.

Furthermore, the compression unit may include the plurality of pairs of compression rollers arranged in the vertical direction, and any one pair of compression rollers are arranged so that the portion in which both compression rollers thereof come into contact with each other is aligned at a predetermined angle with the portion in which the other pair of compression rollers come into contact with each other.

In addition, the compression unit may include a first compression unit and a second compression unit, and the second compression unit is arranged so that a portion in which the pair of compression rollers thereof come into contact with each other is aligned at a right angle with a portion in which the pair of compression rollers of the first compression unit come into contact with each other.

Further, the compression unit may include an upper compression unit, a middle compression unit, and a lower compression unit, which are arranged in such a manner that a portion in which the pair of compression rollers of the middle compression unit come into contact with each other is aligned at a predetermined angle with a portion in which the pair of compression rollers of the upper compression unit come into contact with each other, while a portion in which the pair of compression rollers of the lower compression unit come into contact with each other is aligned at a right angle with the portion in which the pair of compression rollers of the upper compression unit come into contact with each other.

Furthermore, the compression rollers included in the plurality of compression units may be rotated by one driving unit in such a manner that rotation velocities of the compression rollers are increased from the upper compression unit to the lower compression unit stage by stage.

Furthermore, the pair of compression rollers may have the compression grooves formed on the outer circumferences thereof so as to have the same inclined angle as each other, as seen from a plan view.

In addition, the pair of compression rollers may have the compression grooves formed on the outer circumferences thereof so as to have symmetrical inclination to each other, as seen from the plan view.

Further, each of the pair of compression rollers may have two compression grooves formed on the outer circumferences thereof so as to cross each other, as seen from the plan view.

Furthermore, the compression grooves may be formed on the outer circumference of the compression rollers so as to have gradually decreased width and depth from the pair of compression rollers of the upper compression unit to the pair of compression rollers of the lower compression unit.

The above and other objects, features and other advantages of the present invention will be more clearly understood from the following detailed description taken in conjunction with the accompanying drawings, in which:
FIG. 1 is a perspective view illustrating a feedstuff compression device according to the present invention;
FIG. 2 is a perspective view illustrating an installed state of the feedstuff compression device according to the present invention;
FIG. 3 is an exploded perspective view illustrating the feedstuff compression device according to the present invention;
FIG. 4 is a side view illustrating the feedstuff compression device according to the present invention;
FIG. 5 is a plan view illustrating a compression unit of one example according to the present invention;
FIG. 6 is a cross-sectional view illustrating a tension unit of one example according to the present invention;
FIG. 7 is a cross-sectional view with a partial enlarged view illustrating a tension unit of another example according to the present invention;
FIG. 8 is a perspective view illustrating a compression unit of another example according to the present invention;
FIG. 9 is a perspective view illustrating a compression unit of another example according to the present invention;
FIG. 10 is a perspective view illustrating a compression unit of another example according to the present invention;
FIG. 11 is a plan view illustrating compression grooves of another example according to the present invention;
FIG. 12 is a plan view illustrating compression grooves of another example according to the present invention;
FIG. 13 is a flow chart of a processing feedstuff using the feedstuff compression device according to the present invention; and
FIG. 14 is photographs for comparing excrements obtained from pigs eating the feedstuff processed using the feedstuff compression device according to the present invention (left photograph) and eating the unprocessed feedstuff as a comparative example (right photograph).

Hereinafter, preferred embodiments of the present invention will be described in detail with reference to the accompanying drawings.

However, those skilled in the art will appreciate that such embodiments are provided for illustrative purposes and do not limit subject matters to be protected as appended claims, and various alterations and modifications of the embodiments are possible within the scope and spirit of the present invention.

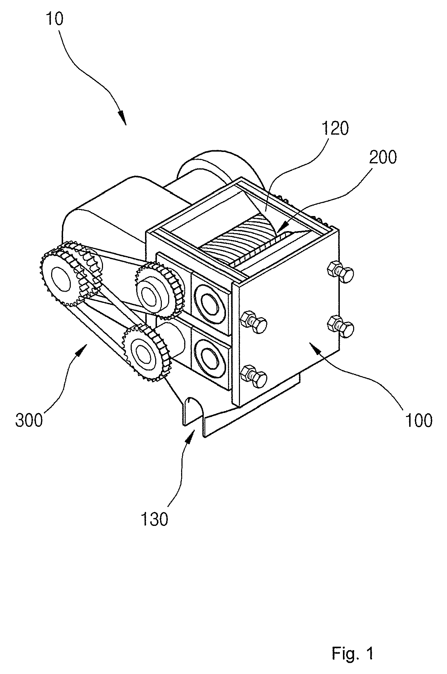

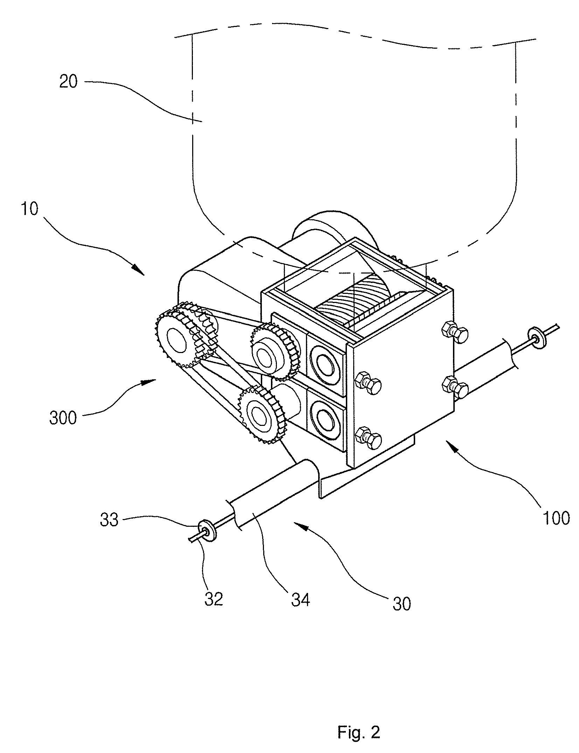

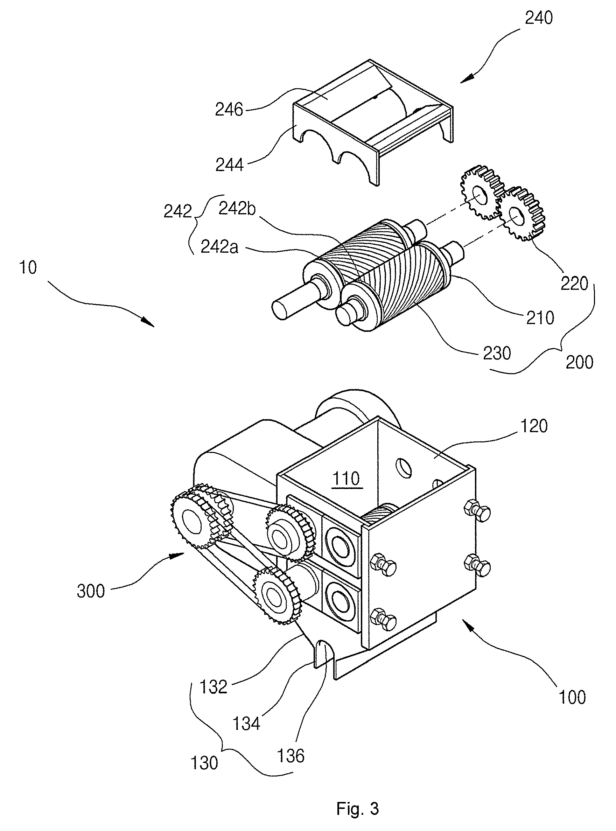

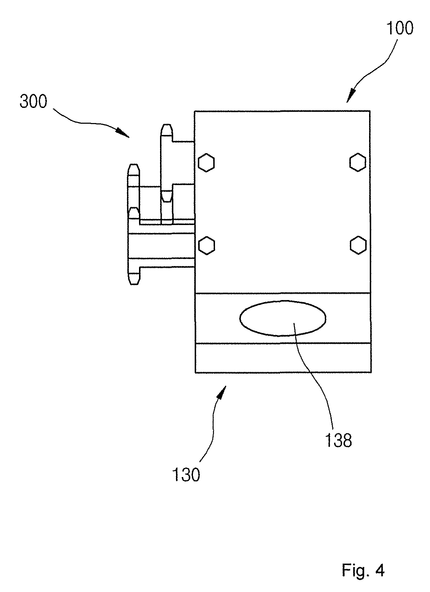

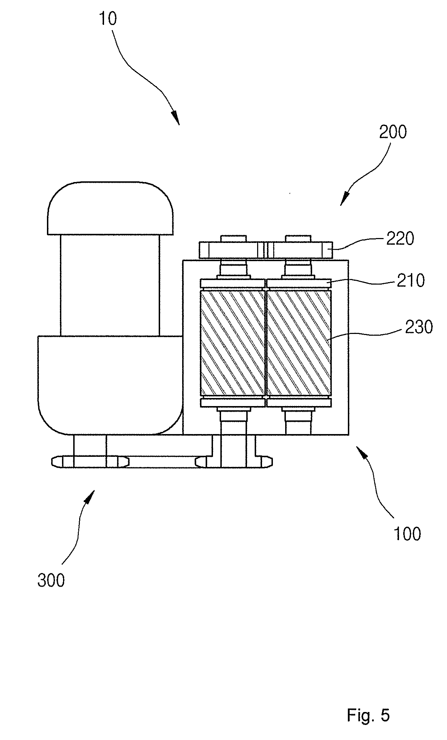

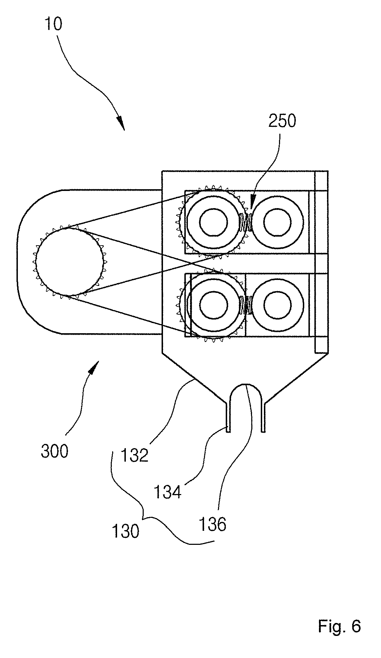

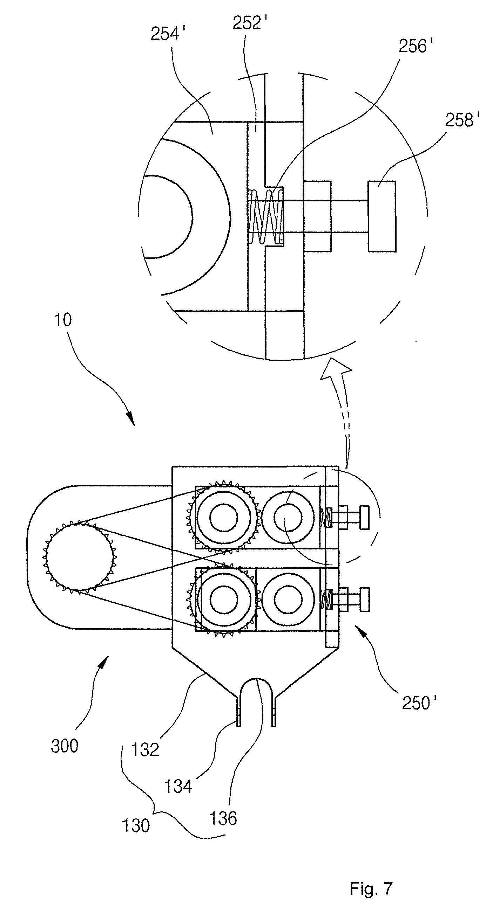

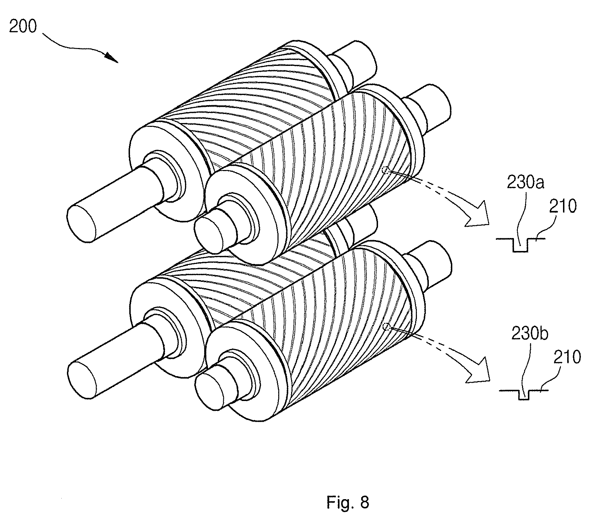

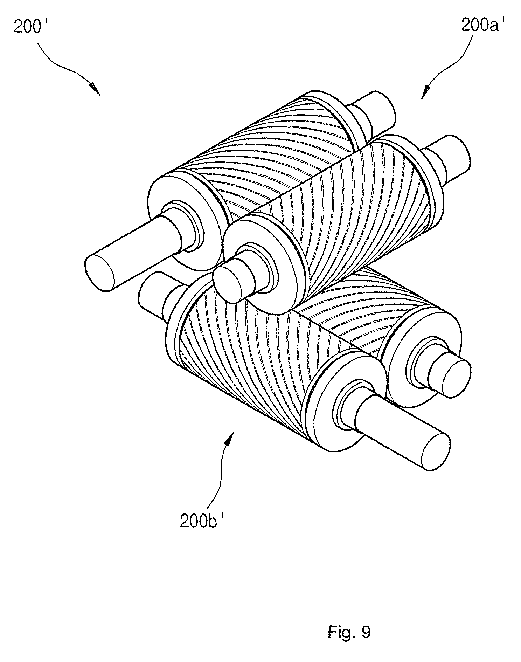

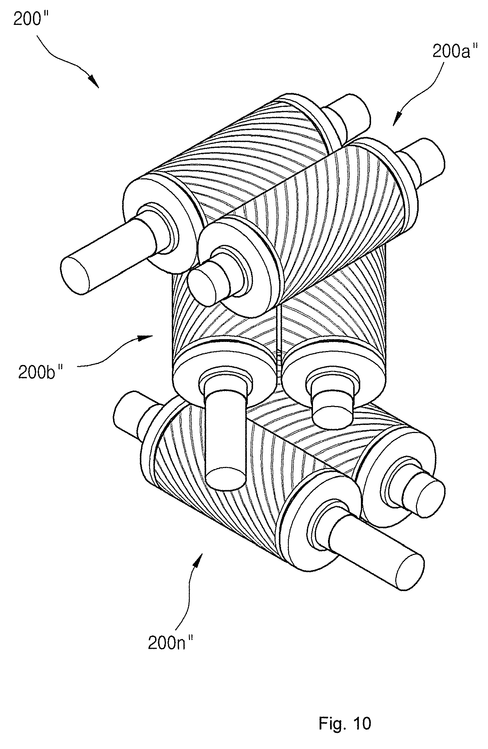

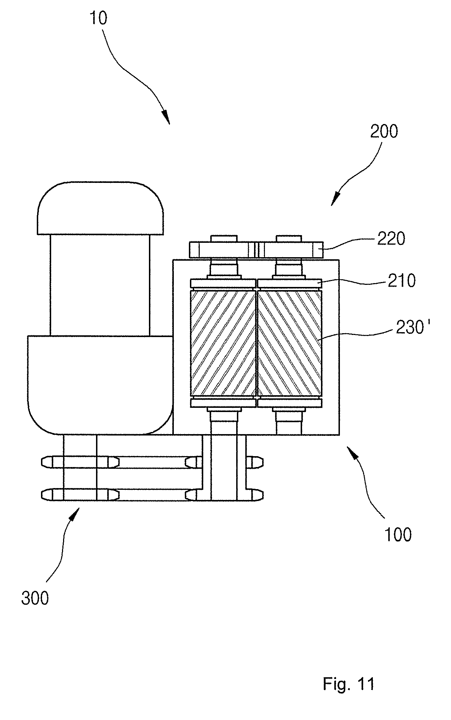

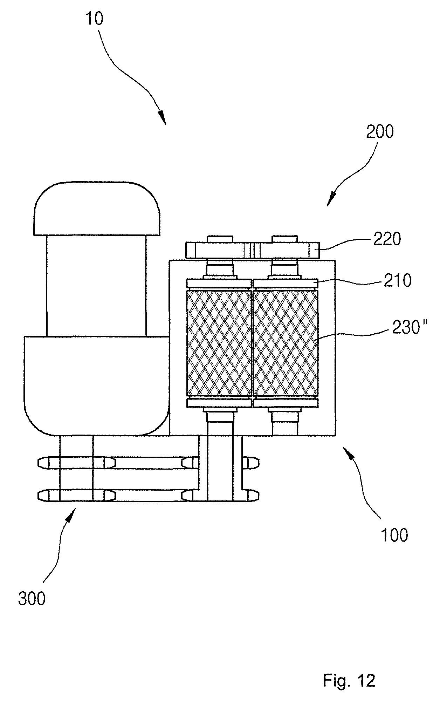

FIG. 1 is a perspective view illustrating a feedstuff compression device according to the present invention, FIG. 2 is a perspective view illustrating an installed state of the feedstuff compression device according to the present invention, FIG. 3 is an exploded perspective view illustrating the feedstuff compression device according to the present invention, FIG. 4 is a side view illustrating the feedstuff compression device according to the present invention, FIG. 5 is a plan view illustrating a compression unit of one example according to the present invention, FIG. 6 is a cross-sectional view illustrating a tension unit of one example according to the present invention, FIG. 7 is a cross-sectional view with a partial enlarged view illustrating a tension unit of another example according to the present invention, FIG. 8 is a perspective view illustrating a compression unit of another example according to the present invention, FIG. 9 is a perspective view illustrating a compression unit of another example according to the present invention, FIG. 10 is a perspective view illustrating a compression unit of another example according to the present invention, FIG. 11 is a plan view illustrating compression grooves of another example according to the present invention, and FIG. 12 is a plan view illustrating compression grooves of another example according to the present invention.

As illustrated in FIGS. 1 to 12, a feedstuff compression device 10 according to the present invention includes a body housing 100, a compression unit 200 disposed in the body housing 100 and a driving unit 300 for driving the compression unit 200.

The body housing 100 includes a feedstuff inlet 120 formed at an upper portion thereof so as to communicate with a silo 20 for storing feedstuff, a feedstuff discharge unit 130 formed at a lower portion thereof, and a compression chamber 110 formed therein so as to communicate the feedstuff inlet 120 with the feedstuff discharge unit 130.

In addition, the compression unit 200 includes a pair of compression rollers 210 rotatably installed in the compression chamber 110 of the body housing 100 to compress and crush the feedstuff supplied from the silo 20 through the feedstuff inlet 120 by rotating in a direction of coming into contact with each other.

The driving unit 300 is provided in the body housing 100 to rotate the pair of compression rollers 210 of the compression unit 200 in opposite directions to each other.

In the feedstuff compression device 10 having the above-described configuration, when the feedstuff of the silo 20 is supplied into the compression chamber 110 through the feedstuff inlet 120 of the body housing 100, the feedstuff is compressed and crushed by the pair of compression rollers 210, and then discharged through the feedstuff discharge unit 130. Therefore, it is possible to feed the feedstuff crushed in a smaller particle size than the feedstuff stored in the silo 20.

Herein, the silo 20 serves to store a large feedstuff and discharge the feedstuff in a constant amount as necessary. When the particle size of the feedstuff is too small, since a frictional force between the feedstuff and an inner surface of the silo is increased, there may be a problem that the feedstuff does move to a lower side thereof.

Therefore, since each feedstuff manufacturer prepares the feedstuff of a particle size suitable to be dropped to the lower side in the silo 20, there is no way for the breeding farms to store the feedstuff having a slightly larger particle size in the silo 20.

However, in the present invention, the feedstuff having a slightly larger particle size is compressed and crushed to the feedstuff of a small particle size through the compression unit 200, and thereby it is possible to feed the feedstuff of a particle size that can be easily digested by a livestock.

Therefore, an amount of undigested and discarded feedstuff may be decreased by increasing the amount of feedstuff that can be easily digested by the livestock, and thereby a feedstuff usage necessary for breeding may be decreased, as well as breeding costs may be reduced.

Specifically, when feeding the conventional unprocessed feedstuff, pigs digest only 40% of feedstuff intake, but when feeding the feedstuff compressed and crushed through the compression unit 200, the pigs digest 20% more of feedstuff intake than the unprocessed feedstuff, and thereby the feedstuff usage necessary for breeding may be decreased.

As illustrated in FIG. 2, the feedstuff compression device 10 having the above-described configuration is provided between the silo 20 and a feedstuff feed unit 30 to feed the feedstuff crushed by the pair of compression rollers 210 to each manger through the feedstuff feed unit 30.

Herein, the feedstuff feed unit 30 is provided with a feed wire 32 having a plurality of discs 33 fixed thereto at constant intervals to feed the crushed feedstuff while moving in an endless track scheme, and a feedstuff feed pipe 34 in which the feed wire 32 is movably installed. The feedstuff feed pipe 34 has an inlet port into which the crushed feedstuff is introduced from the feedstuff discharge unit 130, and an outlet port for feeding the introduced feedstuff to the mangers.

For this, the feedstuff discharge unit 130 of the body housing 100 includes a discharge hoper 132, a mounting plate 134, and a discharge port 136.

The discharge hoper 132 is slantly formed so that both sides thereof are decreased downward to a central portion thereof, as seen from a direction in which the feedstuff is supplied through the feedstuff inlet 120.

The mounting plate 134 is formed at a lower end portion of the discharge hoper 132 so that the feedstuff feed pipe 34 having the inlet port is mounted therein. The discharge port 136 is formed in the discharge hoper 132 and the mounting plate 134 in communication with the compression chamber 110 so as to feed the crushed feedstuff to the inlet port of the feedstuff feed unit 30.

In this case, as illustrated in FIG. 4, it is preferable that the discharge hoper 132 has a transparent window 138 formed in an inclined surface thereof so as to visually inspect an inside of the discharge hoper 132 from an outside thereof.

The compression unit 200 includes, as illustrated in FIG. 5, the above-described pair of compression rollers 210 and a pair of compression gears 220, and a plurality of compression grooves 230 formed on an outer circumference of the compression rollers 210.

The pair of compression rollers 210 are rotatably provided in the body housing 100 in the direction of coming into contact with each other, and the compression gears 220 are fixed to end portions of the respective compression rollers 210 to rotate the compression rollers 210 in such a manner that, when any one compression roller 210 rotates, the other compression roller 210 also rotates in an opposite direction to the one compression roller 210.

The compression grooves 230 are formed on an outer circumference of each compression roller 210 in a spiral shape so as to more easily compress and crush the feedstuff.

The feedstuff compression device 10 further includes a guide unit 240 disposed above the compression rollers 210 in the compression chamber 110 to guide the feedstuff introduced from the silo 20 to a portion in which the pair of compression rollers 210 come into contact with each other.

The guide unit 240 includes, as illustrated in FIG. 3, insertion grooves 242 formed on both end portions of the respective compression rollers 210, retaining plates 244 having semicircular fitting parts corresponding to the insertion grooves 242, and guide plates 246 integrally formed with the retaining plates 244.

The insertion grooves 242 are formed on outer circumferences of the both end portions of the pair of compression rollers 210 in a ring shape corresponding to the fitting parts of the retaining plates 244. The retaining plates 244 are provided to prevent the feedstuff from coming out of the pair of compression rollers 210.

The retaining plates 244 are disposed on the pair of compression rollers 210 in such a manner that the fitting parts formed in both end portions thereof are inserted in the insertion grooves 242 formed in each of one end portions of the compression rollers 210 and in each of the other end portions thereof.

In other words, the insertion groove 242 includes a first insertion groove 242a formed in each of one end portions of the pair of compression rollers 210 provided with the compression gears 220, and a second insertion groove 242b formed in each of the other end portions of the pair of compression rollers 210.

Herein, the retaining plates 244 are mounted on the compression rollers 210 through the fitting parts inserted in the first and second insertion grooves 242a and 242b to prevent the feedstuff from coming out of the pair of compression rollers 210.

The guide plates 246 provided between the retaining plates 244 are slantly formed so as to supply the feedstuff to the portion in which the pair of compression rollers 210 come into contact with each other.

By the guide plate 246 and the retaining plate 244, it is possible to easily supply the feedstuff supplied from the silo 20 to the compression rollers 210 while preventing the feedstuff from coming out therefrom.

The feedstuff compression device 10 further includes a tension unit 250 for pressing the pair of compression rollers 210 in a direction in which both rollers come into contact with each other.

As illustrated in FIG. 6, the tension unit 250 having elasticity is disposed between the end portions of the pair of compression rollers 210 provided with the compression gears 220 to press the compression rollers 210 in the direction in which both rollers come into contact with each other.

By the pair of compression rollers 210 coming into contact with each other pressed by the tension unit 250, the feedstuff may be compressed and crushed to a particle size that can be easily digested by a livestock.

Meanwhile, as illustrated in FIG. 7, a tension unit 250' of another example includes a guide groove 252', a moving block 254', an elastic member 256', and a control bolt 258'.

The guide groove 252' is formed in the body housing 100 at a position in which the end portions of the compression rollers 210 provided with the compression gears 220 are arranged, and the moving block 254' is mounted on each end portion of the compression rollers 210 so as to move along the guide groove 252'.

The elastic member 256' having elasticity presses and moves any one moving block 254' to the other moving block 254' so as to press any one compression roller 210 to the other compression roller 210 in the direction in which both rollers come into contact with each other.

The control bolt 258' is screwed to a side wall of the body housing 100 for controlling the pressing force of the elastic member 256'. Herein, the compression level of the elastic member 256' is adjusted depending on the position of the control bolt 258', that is, a gap between the moving block 254' and the side wall on which one end of the elastic member 256' is seated, so as to control the pressing force thereof.

Further, as illustrated in FIG. 8, the compression unit 200 includes a plurality of pairs of compression rollers 210 arranged in a vertical direction of the body housing 100. In this case, a portion in which one pair of compression rollers 210 come into contact with each other is aligned in the same direction as a portion in which the other pair of compression rollers 210 come into contact with each other in the vertical direction.

Thereby, the feedstuff compressed and crushed by the one (upper) pair of compression rollers 210 may be easily supplied to a portion in which the other (lower) pair of compression rollers 210 come into contact with each other.

Meanwhile, as illustrated in FIGS. 9 and 10, according to other examples of the present invention, the compression unit 200 may include the plurality of pairs of compression rollers 210 arranged in the vertical direction. For example, as seen from the plan view, any one pair of compression rollers 210 are arranged so that the portion in which both compression rollers 210 thereof come into contact with each other is aligned at a predetermined angle with the portion in which the other pair of compression rollers 210 come into contact with each other.

First, as illustrated in FIG. 9, a compression unit 200' of another example includes a first compression unit 200a' and a second compression unit 200b'.

Herein, the second compression unit 200b' is arranged so that a portion in which the pair of compression rollers thereof come into contact with each other is aligned at a right angle with a portion in which the pair of compression rollers of the first compression unit 200a' come into contact with each other.

Of course, the feedstuff compressed and crushed by the first compression unit 200a' is guided by a separate guide to the portion in which the pair of compression rollers of the second compression unit 200b' come into contact with each other.

Next, as illustrated in FIG. 10, a compression unit 200" of another example includes an upper compression unit 200a", a middle compression unit 200b", and a lower compression unit 200n", which are arranged in such a manner that a portion in which the pair of compression rollers of the middle compression unit 200b" come into contact with each other is aligned at a predetermined angle within a range of 0 to 90 degrees, and preferably, 45 degrees, with a portion in which the pair of compression rollers of the upper compression unit 200a" come into contact with each other, while a portion in which the pair of compression rollers of the lower compression unit 200n" come into contact with each other is aligned at a right angle with the portion in which the pair of compression rollers of the upper compression unit 200a" come into contact with each other.

Of course, separate guides are provided between the upper compression unit 200a" and the middle compression unit 200b", as well as between the middle compression unit 200b" and the lower compression unit 200n", such that the feedstuff compressed and crushed by the upper compression unit 200a" is guided by the separate guides to the portions in which the each pair of compression rollers of the middle and lower compression unit 200b" and 200n" come into contact with each other.

In addition, as illustrated in FIG. 5, the pair of compression rollers 210 have the compression grooves 230 formed on the outer circumferences thereof so as to have the same inclined angle as each other, as seen from the plan view.

Meanwhile, as illustrated in FIG. 11, according to another example, the pair of compression rollers 210 have compression grooves 230' formed on the outer circumferences thereof so as to have symmetrical inclination to each other, as seen from the plan view.

Further, as illustrated in FIG. 12, according to another example, each of the pair of compression rollers 210 has two compression grooves 230" formed on the outer circumferences thereof so as to cross each other, as seen from the plan view.

In this case, the compression rollers 210 included in the compression units of the respective examples are rotated by one driving unit 300 in such a manner that rotation velocities of the compression rollers 210 are increased from the upper compression unit to the lower compression unit stage by stage.

As a variation, a plurality of driving units 300 may be provided in the feedstuff compression device 10 so as to respectively rotate the compression rollers of the compression unit.

In this case, since the feedstuff has a smaller particle size than the previous stage due to the feedstuff being crushed stage by stage while passing through each compression unit, it is preferable that the rotation velocity of the compression rollers is gradually increased to improve compression and crushing efficiencies.

In addition, the compression grooves are formed on the outer circumference of the compression rollers so as to have gradually decreased width and depth from the pair of compression rollers of the upper compression unit to the pair of compression rollers of the lower compression unit.

As an example, as illustrated in FIG. 8, the compression unit 200 includes two pairs of compression rollers 210, wherein the compression grooves 230b of the lower pair of compression rollers 210 have a smaller width and depth than the compression grooves 230a of the upper pair of compression rollers 210.

When the width and depth of the compression grooves 230 is decreased toward the lower compression unit, the feedstuff has a smaller particle size than the previous stage due to the feedstuff being crushed stage by stage through the compression grooves 230, such that it is possible to improve compression and crushing efficiencies.

As described above, according to the present invention, since the feedstuff is compressed and crushed by the plurality of compression units 200 several times, the amount of feedstuff digested by the livestock may be more increased.

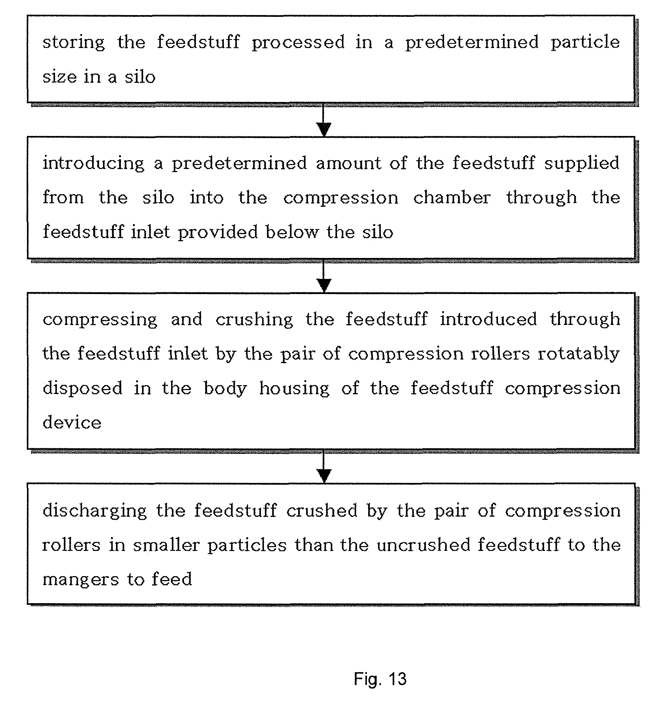

Next, a method for preparing feedstuff using the feedstuff crushing device having the above-described configuration will be described with reference to FIG. 13. As illustrated in FIG. 13, the method for preparing feedstuff includes the processes of: storing the feedstuff processed in a predetermined particle size in a silo; introducing a predetermined amount of the feedstuff supplied from the silo into the compression chamber through the feedstuff inlet provided below the silo; compressing and crushing the feedstuff introduced through the feedstuff inlet by the pair of compression rollers rotatably disposed in the body housing of the feedstuff compression device; and discharging the feedstuff crushed by the pair of compression rollers in smaller particles than the uncrushed feedstuff to the mangers to feed.

The feedstuff prepared by using the feedstuff compression device according to the present invention and the uncrushed feedstuff are fed to pigs for 110 days. In this case, for the pigs eating the feedstuff processed using the feedstuff compression device according to the present invention (an experimental group: average weight 114 kg) and the pigs eating the unprocessed feedstuff of the same amount as the experimental group (a control group: average weight 114 kg), feces outputs, contents of corn in feces, and saved costs for processing feces are measured, and results thereof are listed in Table 1 below.

**[Table 1]**

| | Feedstuff intake | Feces output | Contents of corn in feces | Saved costs for processing feces (per ten pigs) |
|---|---|---|---|---|
| Control group | 300 kg | 120 kg | 25% | 33,00 Won |
| Experimental group | 270 kg | 90 kg | 10% | 27,000 Won |
| | 10% Reduced | 25% Reduced | 60% Decreased | 18.2% Decreased |

Referring to Table 1, it can be seen that the experimental group having pigs fed the feedstuff prepared according to the present invention represents a decreased content of corn in the feces of 60% or more with a high utilization efficiency of feedstuff while significantly reducing the feedstuff intake and the feces output, and exhibits decreased processing costs entailed in processing the feces of 18.2%, as compared to the control group.

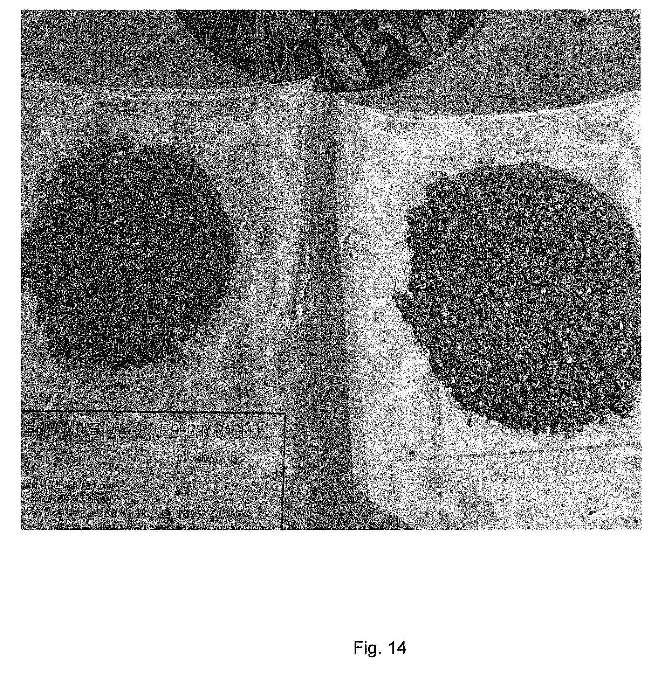

This fact can be seen from photographs of FIG. 14 which illustrate comparison results of the present invention and a comparative example. That is, excrement obtained from pigs eating the feedstuff prepared using the feedstuff compression device according to the present invention have thin and small particle size with small excretion amount as illustrated in the left photograph, while excrement obtained from pigs eating the feedstuff of the same amount as the present invention in a state as stored in the silo (comparative example) has a thick and large particle size with large excretion amount as illustrated in the right photograph. Thereby, it can be seen that the digestion efficiency of the feedstuff prepared using the feedstuff compression device according to the present invention is superior to the comparative example.

As described above, according to the feedstuff compression device of the present invention, the feedstuff which has a particle size suitable to be dropped in the silo and is stored therein is compressed and crushed to the feedstuff having a particle size that can be easily digested by the livestock and fed to the livestock, so that an amount of undigested and discarded feedstuff may be decreased, and whereby a feedstuff usage necessary for breeding the livestock and the feces output may be reduced compared to the related art. Therefore, it is possible to significantly reduce breeding costs.

While the present invention has been described with reference to the preferred embodiments, the present invention is not limited to the above-described embodiments, and it will be understood by those skilled in the related art that various modifications and variations may be made therein without departing from the scope of the present invention as defined by the appended claims.

### Description of Reference Numerals

10: feedstuff compression device, 20: silo
30: feedstuff feeding unit, 100: body housing
110: compression chamber, 120: feedstuff inlet unit
130: feedstuff outlet unit, 200, 200', 200": compression unit
210: compression rollers, 220: compression gears
230: compression grooves, 300: driving unit

## Claims

1. A feedstuff compression device comprising:
a body housing which includes a feedstuff inlet formed at an upper portion thereof so as to communicate with a silo for storing feedstuff, a feedstuff discharge unit formed at a lower portion thereof, and a compression chamber formed therein so as to communicate the feedstuff inlet with the feedstuff discharge unit;
a compression unit which includes a pair of compression rollers rotatably installed in the compression chamber of the body housing to compress and crush the feedstuff supplied from the silo through the feedstuff inlet by rotating in a direction of coming into contact with each other; and
a driving unit which is provided in the body housing to rotate the pair of compression rollers of the compression unit in opposite directions to each other;
wherein the compression unit is configured that, when the feedstuff of the silo is supplied into the compression chamber through the feedstuff inlet of the body housing, the feedstuff is compressed and crushed by the pair of compression rollers, and then discharged through the feedstuff discharge unit so as to feed the feedstuff crushed in a smaller particle size than the feedstuff stored in the silo.

2. The device according to claim 1, wherein the feedstuff crushed by the pair compression rollers is fed to each manger,
the feedstuff feed unit is provided with a feed wire having a plurality of discs fixed thereto at constant intervals to feed the crushed feedstuff while moving therein, and a feedstuff feed pipe in which the feed wire is movably installed, wherein the feedstuff feed pipe has an inlet port into which the crushed feedstuff is introduced from the feedstuff discharge unit, and an outlet port for feeding the introduced feedstuff to the manger,
the feedstuff discharge unit of the body housing includes:
a discharge hoper slantly formed so that both sides thereof are decreased downward to a central portion thereof, as seen from a direction in which the feedstuff is supplied through the feedstuff inlet;
a mounting plate formed at a lower end portion of the discharge hoper so that the feedstuff feed pipe having the inlet port is mounted therein; and
a discharge port formed in the discharge hoper and the mounting plate in communication with the compression chamber so as to feed the crushed feedstuff to the inlet port of the feedstuff feed unit.

3. The device according to claim 2, wherein the discharge hoper has a transparent window formed in an inclined surface thereof so as to visually confirm an inside of the discharge hoper from an outside thereof.

4. The device according to claim 1, wherein the compression unit includes:
the pair of compression rollers rotatably provided in the body housing in the direction of coming into contact with each other;
compression gears fixed to end portions of the respective compression rollers to rotate the compression rollers in such a manner that, when any one compression roller rotates, the other compression roller also rotates in an opposite direction to the one compression roller; and
compression grooves formed on outer circumferences of the respective compression rollers in a spiral shape.

5. The device according to claim 4, further comprising a guide unit disposed above the compression rollers in the compression chamber to guide the feedstuff introduced from the silo to a portion in which both rollers come into contact with each other,
wherein the guide unit includes:
insertion grooves formed on outer circumferences of both end portions of the pair of compression rollers in a ring shape,
retaining plates which have semicircular fitting parts corresponding to the insertion grooves, and are disposed on the compression rollers in such a manner that the fitting parts thereof are inserted in the insertion grooves formed in each of one end portions of the compression rollers and in each of the other end portions thereof, so as to prevent the feedstuff from coming out of the pair of compression rollers; and
guide plates provided between the retaining plates and slantly formed so as to supply the feedstuff to the portion in which both rollers come into contact with each other.

6. The device according to claim 4, further comprising a tension unit configured to press the pair of compression rollers in the direction in which both rollers come into contact with each other.

7. The device according to claim 6, wherein the tension unit having elasticity is disposed between the end portions of the pair of compression rollers provided with the compression gears to press the compression rollers in the direction in which both rollers come into contact with each other.

8. The device according to claim 6, wherein the tension unit includes:
a guide groove formed in the body housing at a position in which the end portions of the compression rollers provided with the compression gears are arranged;
a moving block mounted on each end portion of the compression rollers so as to move along the guide groove;
an elastic member having elasticity which presses and moves any one moving block to the other moving block so as to press any one compression roller to the other compression roller in the direction in which both rollers come into contact with each other; and
a control bolt screwed to a side wall of the body housing to control a pressing force of the elastic member.

9. The device according to claim 4, wherein the compression unit includes a plurality of pairs of compression rollers arranged in a vertical direction, and
a portion in which one pair of compression rollers come into contact with each other is aligned in the same direction as a portion in which the other pair of compression rollers come into contact with each other in the vertical direction, so that the feedstuff compressed and crushed by the one (upper) pair of compression rollers is supplied to a portion in which the other (lower) pair of compression rollers come into contact with each other.

10. The device according to claim 4, wherein the compression unit includes the plurality of pairs of compression rollers arranged in the vertical direction, and
any one pair of compression rollers are arranged so that the portion in which both compression rollers thereof come into contact with each other is aligned at a predetermined angle with the portion in which the other pair of compression rollers come into contact with each other.

11. The device according to claim 10, wherein the compression unit includes a first compression unit and a second compression unit, and
the second compression unit is arranged so that a portion in which the pair of compression rollers thereof come into contact with each other is aligned at a right angle with a portion in which the pair of compression rollers of the first compression unit come into contact with each other.

12. The device according to claim 10, wherein the compression unit includes an upper compression unit, a middle compression unit, and a lower compression unit, which are arranged in such a manner that a portion in which the pair of compression rollers of the middle compression unit come into contact with each other is aligned at a predetermined angle with a portion in which the pair of compression rollers of the upper compression unit come into contact with each other, while a portion in which the pair of compression rollers of the lower compression unit come into contact with each other is aligned at a right angle with the portion in which the pair of compression rollers of the upper compression unit come into contact with each other.

13. The device according to claim 9 or 10, wherein the compression rollers included in the plurality of compression units are rotated by one driving unit in such a manner that rotation velocities of the compression rollers are increased from the upper compression unit to the lower compression unit stage by stage.

14. The device according to claim 4, wherein the pair of compression rollers have the compression grooves formed on the outer circumferences thereof so as to have the same inclined angle as each other, as seen from a plan view.

15. The device according to claim 4, wherein the pair of compression rollers have the compression grooves formed on the outer circumferences thereof so as to have symmetrical inclination to each other, as seen from the plan view.

16. The device according to claim 4, wherein each of the pair of compression rollers has two compression grooves formed on the outer circumferences thereof so as to cross each other, as seen from the plan view.

17. The device according to claim 9 or 10, wherein the compression grooves are formed on the outer circumference of the compression rollers so as to have gradually decreased width and depth from the pair of compression rollers of the upper compression unit to the pair of compression rollers of the lower compression unit.
